# EUROPEAN PATENT APPLICATION

(11) **EP 4 738 516 A1**
(43) Date of publication of application: **06.05.2026**
(21) Application number: 24845976.0
(22) Date of filing: 22.07.2024
(51) Int. Cl.: H01M 10/0567, H01M 10/0569, H01M 4/505, H01M 4/525, H01M 10/052

(54) **LITHIUM SECONDARY BATTERY**

(30) Priority: 26.07.2023 KR 20230097714
(71) Applicant: SK On Co., Ltd., Seoul 03161 (KR)
(72) Inventor: CHO, In Haeng, Daejeon 34124 (KR); KIM, Seung Hyun, Daejeon 34124 (KR); PARK, Young Uk, Daejeon 34124 (KR); KIM, Jeong Yun, Daejeon 34124 (KR); SHIM, Yu Na, Daejeon 34124 (KR); CHO, Yong Hyun, Daejeon 34124 (KR)
(74) Representative: Prüfer & Partner mbB Patentanwälte · Rechtsanwälte
(86) International application number: PCT/KR2024/010539
(87) International publication number: WO 2025/023674

(57) **Abstract**

A lithium secondary battery according to embodiments of the present invention includes: an electrode assembly including a cathode containing a lithium-transition metal oxide in which a molar ratio of lithium to all metal elements is greater than 1, and an anode disposed opposite the cathode; and an electrolyte solution that impregnates the electrode assembly and includes a fluorine-based additive having a terminal difluorophosphite group (-OPF₂). By using the fluorine-based additive, side reactions of the electrolyte solution may be suppressed, and the high-voltage charging stability of the cathode active material may be improved.

## Description

### [Technical Field]

The disclosure of the present application relates to a lithium secondary battery. More specifically, the present disclosure relates to a lithium secondary battery including an electrode assembly and an electrolyte.

### [Background Art]

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as electric vehicles.

Examples of secondary batteries may include a lithium secondary battery, a nickelcadmium battery, a nickel-hydrogen battery and the like. Among them, the lithium secondary battery has a high operating voltage and a high energy density per unit weight, making it advantageous in terms of charging speed and weight reduction. In this regard, the lithium secondary battery has been actively developed and applied to various industrial fields.

For example, the lithium secondary battery may include: an electrode assembly including a cathode, an anode, and a separation membrane (separator); and an electrolyte that impregnates the electrode assembly. The lithium secondary battery may further include, for example, a pouch-type outer case that accommodates the electrode assembly and the electrolyte.

As the application scope of lithium secondary batteries expands, demands for longer cycle life, higher capacity, and operational stability are increasing. Accordingly, lithium secondary batteries that provide consistent output and capacity even during repeated charge and discharge cycles are desirable.

For example, the chemical composition of a cathode active material may be designed to implement a high-capacity lithium secondary battery. However, the stability of the battery may be deteriorated due to impurities remaining in the cathode active material and side reactions with the electrolyte.

Therefore, the electrolyte used in the lithium secondary battery also needs to be manufactured to provide stable operation over a high-capacity, high-voltage charge/discharge range.

### [Summary of Invention]

### [Problems to be Solved by Invention]

An object of the present disclosure is to provide a lithium secondary battery having improved capacity characteristics and operational stability.

### [Means for Solving Problems]

A lithium secondary battery according to embodiments of the present disclosure includes: an electrode assembly including a cathode containing a lithium-transition metal oxide in which the molar ratio of lithium to all metal elements is greater than 1, and an anode disposed opposite the cathode; and an electrolyte solution that impregnates the electrode assembly and includes a fluorine-based additive having a terminal difluorophosphite group (-OPF₂).

In some embodiments, the fluorine-based additive may include a compound in which the terminal difluorophosphite group is bonded to a branched saturated hydrocarbon group.

In some embodiments, the fluorine-based additive may include a compound represented by chemical formula 1 or chemical formula 2 below. 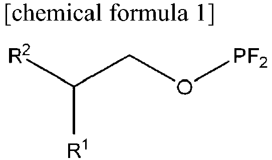 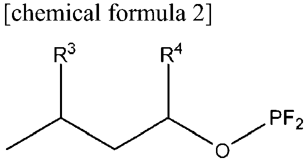 (in chemical formulae 1 and 2, R¹, R², R³ and R⁴ are each independently a C1-C10 alkyl group).

In some embodiments, in chemical formula 1, R¹ is a C4-C10 alkyl group, and R², R³ and R⁴ may each independently be a C1-C3 alkyl group.

In some embodiments, the fluorine-based additive may include a compound represented by chemical formula 1-1 or chemical formula 2-1 below.

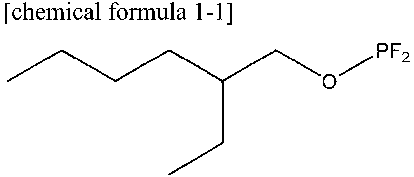

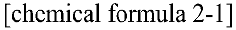

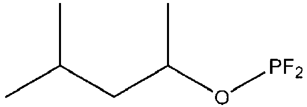

In some embodiments, the electrolyte solution may further include an organic solvent and a lithium salt, and the fluorine-based additive may be included in an amount of 0.1% by weight to 5.0% by weight, based on the total weight of the electrolyte solution.

In some embodiments, the fluorine-based additive may be included in an amount of 0.5% by weight to 2.0 % by weight, based on the total weight of the electrolyte solution.

In some embodiments, the electrolyte solution may further include at least one auxiliary additive selected from the group consisting of a cyclic carbonate compound, a fluorine-substituted cyclic carbonate compound, a sultone compound, and a cyclic sulfonate compound.

In some embodiments, the auxiliary additive may be included in an amount of 0.01% by weight to 5% by weight, based on the total weight of the electrolyte solution.

In some embodiments, the organic solvent may include at least one selected from the group consisting of ethylene carbonate (EC), ethyl methyl carbonate (EMC), dimethyl carbonate (DMC), and diethyl carbonate (DEC).

In some embodiments, the molar ratio of lithium to all metal elements in the lithium-transition metal oxide may be greater than 1.1.

In some embodiments, the lithium-transition metal oxide may further include nickel and manganese.

In some embodiments, the molar ratio of manganese in the lithium-transition metal oxide may be greater than the molar ratio of nickel.

In some embodiments, the molar fraction of manganese to all elements excluding lithium and oxygen in the lithium-transition metal oxide may be 0.5 or more.

### [Advantageous effects]

The lithium secondary battery according to embodiments of the present disclosure may implement improved capacity characteristics through high-voltage charging. In addition, side reactions of the electrolyte solution, decomposition of electrolyte solution, and other issues caused by high-voltage charging may be suppressed through the fluorine-based additive, thereby providing a lithium secondary battery having stable high-capacity retention.

In some embodiments, the fluorine-based additive may form a stable protective film on the surface of the cathode active material, thereby effectively suppressing gas generation at high temperatures during high-temperature charging/discharging, for example.

### [Brief Description of Drawings]

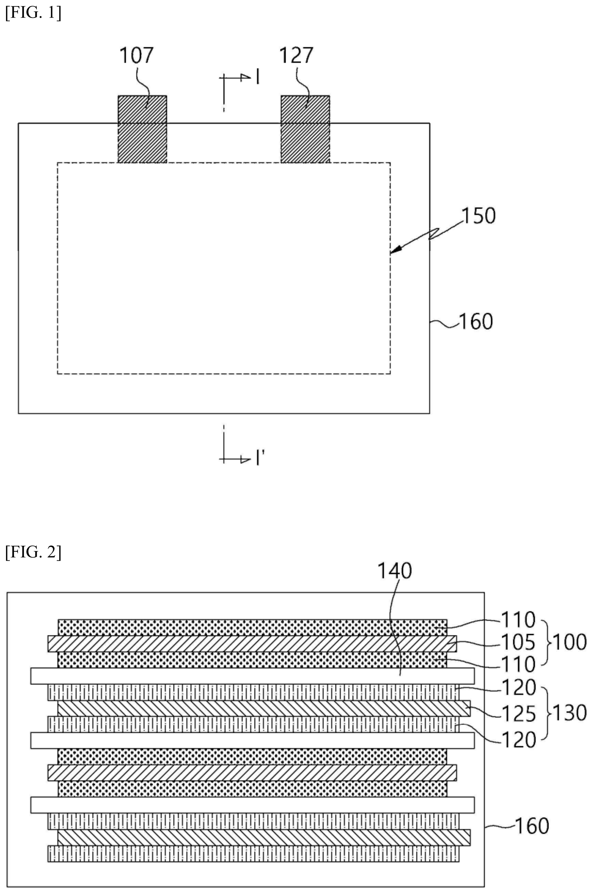

FIGS. 1 and 2 are schematic plan and cross-sectional views, respectively, illustrating a lithium secondary battery according to exemplary embodiments. For example, FIG. 2 is a cross-sectional view taken along line I-I' in FIG. 1.

### [Mode for Carrying out Invention]

According to embodiments of the present disclosure, a lithium secondary battery including a lithium transition metal oxide-based cathode active material and an electrolyte containing a fluorine-based additive is provided.

FIGS. 1 and 2 are schematic plan and cross-sectional views, respectively, illustrating a lithium secondary battery according to exemplary embodiments. The lithium secondary battery shown in FIGS. 1 and 2 is merely illustrative for convenience of description, and is not limited to the form shown in FIGS. 1 and 2.

Referring to FIGS. 1 and 2, the lithium secondary battery may include an electrode assembly including a cathode 100 and an anode 130. The electrode assembly may further include a separator 140 interposed between the cathode 100 and the anode 130. The electrode assembly may be accommodated in a case 160 together with an electrolyte solution including an electrolyte and may be impregnated with the electrolyte.

The cathode 100 may include a cathode active material layer 110 formed by applying a cathode active material onto a cathode current collector 105. The cathode active material may include a compound capable of reversibly intercalating and deintercalating lithium ions.

The cathode active material may be mixed and stirred with a binder, a conductive material, and/or a dispersant in a solvent to prepare a slurry. The slurry may be coated on the cathode current collector 105, and then compressed and dried to prepare the cathode 100.

The cathode current collector 105 may include, for example, stainless steel, nickel, aluminum, titanium, copper, or an alloy thereof, and preferably includes aluminum or an aluminum alloy.

The binder may include, for example, an organic binder such as vinylidene fluoridehexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as the cathode binder. In this case, the amount of the binder for forming the cathode active material layer may be reduced and the amount of the cathode active material may be relatively increased, thereby improving the output and capacity of the secondary battery.

The conductive material may be included to promote electron migration between the active material particles. For example, the conductive material may include carbon-based conductive materials such as graphite, carbon black, graphene, or carbon nanotubes; and/or metal-based conductive materials such as tin, tin oxide, and titanium oxide; as well as perovskite materials such as LaSrCoO₃, and LaSrMnO₃.

The cathode active material may include a lithium-transition metal oxide. For example, the lithium-transition metal oxide may include nickel (Ni), and may further include at least one of cobalt (Co) and manganese (Mn). In exemplary embodiments, the lithium-transition metal oxide may be present in the form of lithium (Li)-rich oxide particles.

According to exemplary embodiments, the lithium-rich oxide particles may contain nickel and manganese, and the molar ratio of lithium to all metal elements included in the lithium-rich oxide particles may be greater than 1. In one embodiment, the molar ratio of lithium to all metal elements included in the lithium-rich oxide particles may be greater than 1.1. In one embodiment, the molar ratio of lithium to all metal elements included in the lithium-rich oxide particles may be 1.15 or more, or 1.2 or more.

The cathode active material may include a plurality of lithium-rich oxide particles. In some embodiments, the content of the lithium-rich oxide particles, based on the total weight of the cathode active material, may be 50% by weight ("wt%") or more, and preferably 60 wt% or more, 70 wt% or more, 80 wt% or more, or 90 wt% or more.

In one embodiment, the cathode active material may further include other active material particles commonly used in the field of lithium secondary batteries in addition to the lithium-rich oxide particles. For example, the cathode active material may further include lithium metal oxide particles in which the molar ratio of lithium does not substantially exceed 1.

In one embodiment, the cathode active material may be substantially composed of the lithium-rich oxide particles.

In one embodiment, the lithium-rich oxide particles may include a Li₂MnO₃ domain (C2/m space group) and a LiₐM_{b}O_{c} domain (R3m space group, where M is at least one of Co, Na, Ca, Y, Hf, Ta, B, Si, Ba, Ra, Mg, V, Ti, Al, Fe, Ru, Zr, W, Sn, Nb, Mo, Cu, Zn, Cr, Ga, V and Bi, and a, b and c satisfy 1.8≤a+b≤2.2, 0.9≤a/b<1.05, and 1.9≤c≤2.1).

In some embodiments, in the lithium-rich oxide particles, the molar ratio of the Li₂MnO₃ domain and the LiMO₂ domain may be expressed as w:1-w, and w may be 0.05 to 0.7, or 0.1 to 0.7.

For example, the lithium-rich oxide particles may be prepared by a co-precipitation method.

For example, metal salts, a chelating agent (e.g., ammonium hydroxide, ammonium carbonate, etc.), and a co-precipitant (e.g., sodium hydroxide, sodium carbonate, etc.) may be mixed and subjected to a co-precipitation reaction to prepare metal hydroxide particles. For example, the molar ratio between the metal salts may be adjusted depending on the chemical formula of the intended lithium-rich oxide particles.

For example, the metal hydroxide particles and a lithium source may be mixed and calcined so that the molar ratio of the lithium source to the molar amount of the metal hydroxide particles is 1.05 to 1.95, 1.1 to 1.95, 1.15 to 1.95, or 1.2 to 1.95, to prepare the lithium-rich oxide particles.

In one embodiment, the lithium source may include lithium hydroxide or lithium carbonate. In some embodiments, the lithium source may include lithium hydroxide.

According to exemplary embodiments, a precursor mixture may be formed by mixing the metal hydroxide particles as a nickel-manganese precursor and lithium hydroxide as a lithium precursor. The precursor mixture may be subjected to a first heat treatment and a second heat treatment to form lithium-rich oxide particles.

In some embodiments, the first heat treatment may be performed at a temperature ranging from 200 to 300 °C. The second heat treatment may be performed at a temperature of 800 to 900 °C.

As described above, the first heat treatment may be performed at a relatively low temperature to selectively induce lithium insertion into the particle surface, thereby increasing the lithium concentration at the surface. Subsequently, the second heat treatment may be performed at a high temperature to stabilize the formed concentration gradient, thereby obtaining lithium-rich oxide particles.

For example, the lithium-rich oxide particles may be activated by applying a voltage of 4.4 V (vs Li/Li⁺) or higher (e.g., 4.4 V to 4.8 V) to the lithium-rich oxide particles (see Reaction 1-1 below). Alternatively, the lithium secondary battery including the lithium-rich oxide particles may be charged and discharged at a voltage of 4.4 V (vs Li/Li⁺) or higher to activate the lithium-rich oxide particles (see Reactions 1-1 and 1-2 below).

In one embodiment, the activated particles may include a domain derived from a Li₂MnO₃ domain among the lithium-rich oxide particles.

In some embodiments, the domain derived from the Li₂MnO₃ domain may include at least one of MnO₂, Mn₂O₄, LiMnO₂, LiMn₂O₄, and Li₂Mn₂O₄.

For example, at least a portion of the Li₂MnO₃ among the lithium-rich oxide particles may be converted into MnO₂ and LiMnO₂ by the activation, as shown in Reactions 1-1 and 1-2 below. The MnO₂ and LiMnO₂ may reversibly insert and de-insert lithium ions, as shown in Reaction 2 below. Accordingly, the lithium-rich oxide particles may provide increased capacity.

[Reaction 1-1] (Charging) Li₂MnO₃ → MnO₂ + 2Li+ + 1/2O₂ + 2e⁻

[Reaction 1-2] (Discharging) MnO₂ + Li⁺ + e⁻ → LiMnO₂

[Reaction 2] (Charging) LiMnO₂ → MnO₂ + Li⁺ + e⁻ (Discharging) MnO₂ + Li⁺ + e⁻ → LiMnO₂

In some embodiments, the LiMnO₂ among the activated particles may further react to be converted into Mn₂O₄, LiMn₂O₄, or Li₂Mn₂O₄.

In some embodiments, the activated particles may include the LiₐM_{b}O_{c} domain, and the Li₂MnO₃ domain and/or a domain derived from the Li₂MnO₃ domain.

In exemplary embodiments, the lithium-rich oxide particles and/or the activated particles may include a crystal structure or a chemical structure represented by chemical formula 1 below.

[chemical formula 1] Liₐ[MₓNi_{y}Mn_{z}]O_{b}

In chemical formula 1, M may include at least one of Co, Na, Ca, Y, Hf, Ta, B, Si, Ba, Ra, Mg, V, Ti, Al, Fe, Ru, Zr, W, Sn, Nb, Mo, Cu, Zn, Cr, Ga, V and Bi.

In chemical formula 1, x, y, a, z and b may satisfy 0≤x≤0.9, 0≤y≤0.9, 0.1≤z≤0.9, 1.8≤a+x+y+z≤2.2, 1.05≤a/(x+y+z)≤1.95, 1.8≤b≤2.2.

In some embodiments, x may satisfy 0<x≤0.9, 0.05≤x≤0.9, 0.1≤x≤0.9, 0<x≤0.8, 0.05≤x≤0.8, or 0.1≤x≤0.8.

In some embodiments, y may satisfy 0<y≤0.9, 0.05≤y≤0.9, 0.1≤y≤0.9, 0<y≤0.8, 0.05≤y≤0.8, or 0.1≤y≤0.8.

In some embodiments, a/(x+y+z) may satisfy 1.1≤a/(x+y+z)≤1.95, 1.15≤a/(x+y+z)≤1.95, 1.2≤a/(x+y+z)≤1.95, or 1.3≤a/(x+y+z)≤1.95.

In some embodiments, the molar ratio of manganese in the lithium-transition metal oxide or the lithium-rich oxide particles may be greater than the molar ratio of nickel.

In a preferred embodiment, the molar fraction of manganese to all elements excluding lithium and oxygen in the lithium-rich oxide particles may be 0.5 or more, and preferably 0.5 to 0.75. For example, 0.5≤z/(x+y+z)≤0.75.

In some embodiments, 0.25≤(x+y)/(x+y+z)≤0.5.

In some embodiments, the molar fraction of cobalt to all elements excluding lithium and oxygen in the lithium-rich oxide particles may be 0 to 0.02. In one embodiment, the lithium-rich oxide particles may be free of cobalt.

In some embodiments, b may satisfy 1.9≤b≤2.1, or 1.95≤b≤2.05.

In some embodiments, M in chemical formula 1 may be included as a dopant of the lithium-rich oxide particles. For example, at least one element among Co, Na, Ca, Y, Hf, Ta, B, Si, Ba, Ra, M g, V, Ti, Al, Fe, Ru, Zr, W, Sn, Nb, Mo, Cu, Zn, Cr, Ga, V and Bi may be included as a dopant in the chemical structure or crystal structure inside the lithium-rich oxide particles of chemical formula 1 having a chemical structure of Li-Ni-Mn-O.

In some embodiments, a coating may be formed on the lithium-rich oxide particles. The coating may contain B, Al, W, Zr, Ti, Mg and/or Co as coating elements.

As described above, by employing a lithium-rich oxide having a relatively high lithium content as the cathode active material, some of the transition metal sites may be substituted with lithium. The lithium-rich oxide may undergo rearrangement of its crystal structure during charging in a relatively high voltage range (e.g., 4.4 V or higher or 4.5 V or higher).

Therefore, charging is possible in the above high-voltage range and high reversible capacity may be provided. In addition, high capacity may be achieved by reducing the amount of relatively expensive cobalt or by excluding cobalt.

However, the lithium-rich oxide may reduce the electrode density due to the high lithium content, thereby decreasing the capacity efficiency relative to the electrode volume. In addition, lithium impurities (e.g., LiOH, Li₂CO₃) may more easily form on the surface of the cathode active material. The lithium impurities may cause side reaction of the electrolyte solution, resulting in gas generation and battery expansion during repeated charge/discharge cycles.

Furthermore, exposure to harsh environments, such as high or low temperatures, may cause instability in the crystal structure of the transition metal, resulting in reduced discharge capacity and a voltage drop.

According to exemplary embodiments of the present invention, the above-described lithium-rich oxide and electrolyte additive may be combined to reduce or suppress the electrical and chemical instability described above.

The electrolyte solution according to exemplary embodiments may include an organic solvent, an electrolyte (e.g., a lithium salt), and a fluorine-based additive.

The organic solvent may include an organic compound that provides sufficient solubility for the lithium salt and the fluorine-based additive, and is electrochemically stable without reacting in the lithium secondary battery. In some embodiments, a non-aqueous organic solvent is used, and the electrolyte solution may be provided as a non-aqueous electrolyte.

In exemplary embodiments, the organic solvent may include a carbonate-based solvent, an ester-based solvent, an ether-based solvent, a ketone-based solvent, an alcohol-based solvent, or an aprotic solvent. These may be used alone or in combination of two or more thereof.

Examples of the carbonate-based solvent may include dimethyl carbonate (DMC), ethyl methyl carbonate (EMC), methyl propyl carbonate, ethyl propyl carbonate, diethyl carbonate (DEC), dipropyl carbonate, propylene carbonate (PC), ethylene carbonate (EC), fluoroethylene carbonate (FEC), butylene carbonate, etc.

Examples of the ester-based solvent may include methyl acetate (MA), ethyl acetate (EA), n-propyl acetate (n-PA), 1,1-dimethylethyl acetate (DMEA), methyl propionate (MP), ethyl propionate (EP), γ-butyrolactone (GBL), decanolide, valerolactone, mevalonolactone, caprolactone, etc.

Examples of the ether-based organic solvents may include dibutyl ether, tetraethylene glycol dimethyl ether (TEGDME), diethylene glycol dimethyl ether (DEGDME), dimethoxyethane, 2-methyltetrahydrofuran, tetrahydrofuran, etc.

Examples of the ketone-based solvent may include cyclohexanone. Examples of the alcohol-based solvent may include ethyl alcohol, isopropyl alcohol, etc.

The aprotic solvent may include a nitrile-based solvent, an amide-based solvent such as dimethylformamide (DMF), a dioxolane-based solvent such as 1,3-dioxolane, or a sulfolanebased solvent.

In a preferred embodiment, a carbonate-based solvent may be used as the organic solvent. For example, the organic solvent may include ethylene carbonate (EC), ethyl methyl carbonate (EMC), dimethyl carbonate (DMC), diethyl carbonate (DEC), or a combination thereof. In one embodiment, a combination of at least two of ethylene carbonate (EC), ethyl methyl carbonate (EMC), dimethyl carbonate (DMC), and diethyl carbonate (DEC) may be used as the organic solvent.

The electrolyte may include, for example, a lithium salt. The lithium salt may be expressed as, for example, Li⁺X⁻, and non-limiting examples of the anion (X-) of the lithium salt may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻. These may be used alone or in combination of two or more lithium salts.

In one embodiment, the lithium salt may include LiBF₄ and/or LiPF₆.

In one embodiment, the lithium salt may be included in the organic solvent at a concentration of 0.01 to 5 M, preferably 0.01 to 2 M, and more preferably 0.1 to 1.5 M. Within this range, the transfer of lithium ions and/or electrons during charge and discharge of the lithium secondary battery may be promoted, thereby improving the capacity characteristics.

According to exemplary embodiments, the fluorine-based additive may include a compound having a terminal difluorophosphite group (-OPF₂). According to exemplary embodiments, the terminal difluorophosphite group of the fluorine-based additive may be linked to a branched saturated hydrocarbon group (e.g., a branched alkyl group).

In some embodiments, the fluorine-based additive may include a compound represented by chemical formula 1 or chemical formula 2 below.

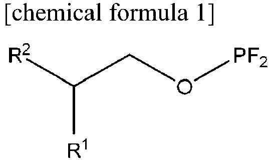

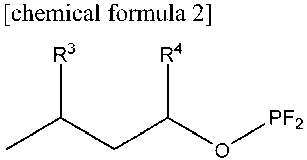

In chemical formulae 1 and 2, R¹, R², R³ and R⁴ may each independently be a C1-C10 alkyl group.

In some embodiments, in chemical formula 1, R¹ may be a C4-C10 alkyl group, and R², R³ and R⁴ may each independently be a C1-C3 alkyl group. Within the above carbon number range, structural stability may be secured by maintaining an appropriate chain length, and deterioration of the cathode active material activity or ion mobility due to excessive increases in branch length or main chain length may be prevented.

According to exemplary embodiments, the fluorine-based additive may include a compound of chemical formula 1-1 or chemical formula 2-1 below.

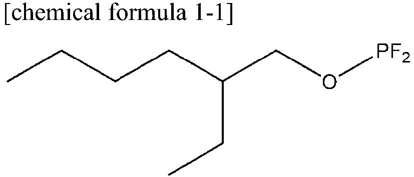

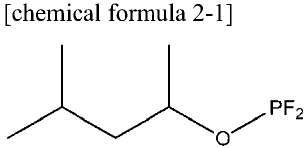

The difluorophosphite group included in the fluorine-based additive may be exposed at a terminal. Therefore, the difluorophosphite group may be more likely to freely contact the cathode active material and form a coordination bond. Consequently, a cathode electrolyte interphase (CEI) layer may be formed at the interface between the cathode active material and the electrolyte, thereby protecting the surface of the cathode active material or the cathode.

In addition, the interaction between the terminal difluorophosphite group of the fluorine-based additive and the transition metal may reduce or suppress the crystal structure or chemical structure instability at the surface of the above-described lithium-rich oxide particles.

In some embodiments, the difluorophosphite group may be bonded to a branched saturated hydrocarbon group, allowing the fluorine-based additive to have a relatively high boiling point and thus increase the possibility of forming a stable protective film at high temperatures. In addition, because the number of contact branches or bridges with the cathode active material increases through the branching, the protective film may be formed more rapidly and easily.

For example, since the fluorine-based additive has a branched alkyl structure, double bonds may be formed in the carbon backbone of the fluorine-based additive during high-temperature charging/discharging. Therefore, after the fluorine-based additive comes into contact with the cathode active material, the formation of a protective film may be further accelerated. Furthermore, the formation of relatively electron-rich double bonds may lead to additional interactions or bonds with the transition metal of the cathode active material.

Therefore, the passivation and surface stabilization effects of the cathode active material may be amplified, thereby significantly improving the high-temperature stability and cycle life of the lithium secondary battery.

As described above, during repeated charge/discharge cycles, the protective film formed by the fluorine-based additive may suppress gas generation due to side reactions caused by the elution of transition metal ions from the cathode active material. Therefore, stable capacity retention of the secondary battery may be ensured even at high temperatures.

For example, at low temperatures of -10 °C or lower, the protective film may be stably maintained due to the molecular structure converted into double bonds within the fluorine-based additive, as described above. Therefore, stable capacity retention may be provided even at low temperatures without activity degradation caused by the protective film.

In some embodiments, the content of the fluorine-based additive, based on the total weight of the electrolyte solution, may be less than about 10 wt% and may be 0.1 wt% or more.

For example, in consideration of implementing sufficient passivation and stabilization effects, the content of the fluorine-based additive may be adjusted to 0.1 wt% or more, 0.2 wt% or more, 0.3 wt% or more, 0.4 wt% or more, 0.5 wt% or more, or 1 wt% or more. In addition, in consideration of lithium ion migration and active material activity in the electrolyte solution, the content of the fluorine-based additive may be adjusted to 9 wt% or less, 7 wt% or less, 6 wt% or less, 5 wt% or less, 4.5 wt% or less, 4 wt% or less, 3.5 wt% or less, 3 wt% or less, or 2 wt% or less.

In a preferred embodiment, the content of the fluorine-based additive may be 0.1 to 5 wt%, more preferably 0.5 to 2 wt%. Within this range, the passivation and surface stabilization effects of the above-described cathode active material may be sufficiently achieved without excessively inhibiting lithium ion migration and the activity of the cathode active material.

In some embodiments, the electrolyte solution may further include an auxiliary additive. For example, the auxiliary additive may include a cyclic carbonate compound containing a double bond, a fluorine-substituted cyclic carbonate compound, a sultone compound, or a cyclic sulfonate compound.

The cyclic carbonate compound containing a double bond may include vinylene carbonate (VC), vinyl ethylene carbonate (VEC), etc.

The fluorine-substituted cyclic carbonate compound may include fluoroethylene carbonate (FEC).

The sultone compound may include 1,3-propane sultone, 1,3-propene sultone, 1,4-butane sultone, etc.

The cyclic sulfonate compound may include 1,2-ethylene sulfate, 1,2-propylene sulfate, etc.

In a preferred embodiment, a fluorine-substituted cyclic carbonate compound and a cyclic carbonate compound may be used together as the auxiliary additive. In this case, the stability and durability of the protective film may be further enhanced. In one embodiment, a sultone compound may be used together with the fluorine-substituted cyclic carbonate compound and the cyclic carbonate compound.

The above-described auxiliary additive may further enhance the durability and stability of the protective film formed by the fluorine-based additive. The auxiliary additive may be included in an appropriate amount within a range that does not impede the passivation action of the fluorine-based additive and the migration of lithium ions within the electrolyte solution.

For example, the content of the auxiliary additive may be adjusted to 5 wt% or less, 4 wt% or less, 3 wt% or less, 2.5 wt% or less, 2 wt% or less, or 1 wt% or less, based on the total weight of the non-aqueous electrolyte, taking into account the action of the fluorine-based additive. In addition, the content of the auxiliary additive may be adjusted to 0.01 wt% or more, 0.02 wt% or more, 0.03 wt% or more, 0.05 wt% or more, 0.1 wt% or more, 0.2 wt% or more, 0.3 wt% or more, 0.4 wt% or more, or 0.5 wt% or more, taking into account the stabilization of the protective film.

In some embodiments, the auxiliary additive may be included in an amount of about 0.01 to 5 wt%, preferably 0.05 to 5 wt%, and more preferably 0.1 to 4 wt%, based on the total weight of the non-aqueous electrolyte. Within this range, the durability of the protective film may be improved without inhibiting the film formation of the fluorine-based additive.

The organic solvent in the electrolyte solution may be used as the balance or the remainder excluding the above-described components.

The anode 130 may include an anode current collector 125 and an anode active material layer 120 formed by coating the anode current collector 125 with an anode active material.

As the anode active material, any active material known in the art may be used, so long as it is capable of absorbing and releasing lithium ions, without particular limitation. For example, carbon-based materials such as crystalline carbon, amorphous carbon, carbon composites, or carbon fibers, or the like; a lithium alloy; a silicon (Si) compound, or tin may be used.

Examples of the amorphous carbon may include hard carbon, coke, mesocarbon microbeads (MCMB), mesophase pitch-based carbon fibers (MPCF), or the like.

Examples of the crystalline carbon may include graphite-based carbon such as natural graphite, artificial graphite, graphitized coke, graphitized MCMB, graphitized MPCF or the like. Elements contained in the lithium alloy may include aluminum, zinc, bismuth, cadmium, antimony, silicon, lead, tin, gallium or indium or the like.

The silicon compound may include, for example, silicon, silicon oxide (e.g., SiOx, 0<x<2), or a silicon-carbon composite compound such as silicon carbide (SiC).

For example, a slurry may be prepared by mixing the anode active material with the above-described binder, conductive material, thickener, and the like in a solvent, followed by stirring. The slurry may be applied to at least one surface of the anode current collector 125, followed by compression and drying to prepare the anode 130.

In some embodiments, the separator 140 may be interposed between the cathode 100 and the anode 130. The separator 140 may include a porous polymer film made of a polyolefin polymer such as ethylene homopolymer, propylene homopolymer, ethylene/butene copolymer, ethylene/hexene copolymer, or ethylene/methacrylate copolymer. The separator 140 may include a nonwoven fabric made of glass fibers having a high melting point, polyethylene terephthalate fibers, etc.

In some embodiments, the anode 130 may have an area (e.g., a contact area with the separator 140) and/or volume greater than that of the cathode 100. Thereby, lithium ions generated from the cathode 100 may smoothly migrate to the anode 130 without being precipitated during the process, for example.

According to exemplary embodiments, an electrode cell is defined by the cathode 100, the anode 130 and the separator 140, and a plurality of electrode cells may be stacked to form, for example, a jelly roll type electrode assembly 150. For example, the electrode assembly 150 may be formed by winding, laminating, or folding the separator 140.

The electrode assembly 150 may be accommodated in the case 160 together with the non-aqueous electrolyte according to the above-described exemplary embodiments to define the lithium secondary battery. According to exemplary embodiments, the non-aqueous electrolyte may be used as the electrolyte.

As shown in FIG. 1, electrode tabs (cathode tabs and anode tabs) protrude from the cathode current collector 105 and the anode current collector 125, respectively, which belong to respective electrode cells, and may extend to one side of the case 160. The electrode tabs may be welded together with the one side of the case 160 to form electrode leads (a cathode lead 107 and an anode lead 127) that extend or are exposed to an outside of the case 160.

The lithium secondary battery may be manufactured, for example, in a cylindrical, prismatic, pouch, or coin type using a can.

Hereinafter, embodiments of the present invention will be further described with reference to specific experimental examples. However, the following examples and comparative example included in the experimental examples are provided merely for illustrative purposes of the present invention and those skilled in the art will obviously understand that various changes and modifications can be made within the scope and spirit of the present invention. Such changes and modifications are to be regarded as falling within the scope of the appended claims.

### Synthesis of Fluorine-Based Additives

### (1) Synthesis Example 1 (Synthesis of the compound of chemical formula 1-1)

### Preparation of 2-ethyl-1-hexyl difluorophosphite

### i) Preparation of 2-ethyl-1-hexyl dichlorophosphite

Heptane (180 mL) and phosphorus trichloride (PCl₃) (31.7 mL, 0.36 mol) were added to a 500 mL round-bottom flask under a nitrogen atmosphere, stirred for 10 minutes, and then cooled to approximately 0 °C. 2-ethyl-1-hexanol (45 g, 0.35 mol) was slowly added dropwise to the reaction solution over 3 hours, and the mixture was then stirred for 1 hour while raising the temperature to room temperature.

The reaction mixture was evaporated under reduced pressure to remove volatile substances, and the final product, 2-ethyl-1-hexyl dichlorophosphite (54 g, 0.23 mol), was obtained in a yield of 67.6% (¹H NMR (500 MHz, CDCl₃) δ 0.91 (t, 6H), 1.30 (m, 6H), 1.38 (m, 2H), 1.59 (m, 1H), 4.15 (m, 2H) ppm).

### ii) Preparation of 2-ethyl-1-hexyldifluorophosphite

Antimony trifluoride (SbF₃) (28 g, 0.16 mol) was added to a 100 mL round-bottom flask under a nitrogen atmosphere. To prevent exothermic reaction, damage to the reaction mixture, and a decrease in the yield of the final product due to a rapid reaction, the mixture was cooled to approximately 0 °C, and 2-ethyl-1-hexyldichlorophosphite (54 g, 0.23 mol) prepared in i) above was slowly added dropwise.

After the reaction was carried out at room temperature for 2 hours, purification was performed by distillation under reduced pressure. The final product, 2-ethyl-1-hexyl difluorophosphite (12.7 g, 0.064 mol), was obtained in a yield of 30% (¹H NMR (500 MHz, CDCl₃) δ 0.89 (t, 6H), 1.28 (m, 6H), 1.38 (m, 2H), 1.52 (m, 1H), 3.98 (m, 2H) ppm).

### (2) Synthesis Example 2 (Synthesis of the compound of chemical formula 2-1)

### i) Preparation of 4-methyl-2-pentyl dichlorophosphite

Hexane (180 mL) and phosphorus trichloride (PCl₃) (40.4 mL, 0.46 mol) were added to a 500 mL round-bottom flask under a nitrogen atmosphere. The mixture was stirred for 10 minutes and then cooled to approximately 0 °C.

4-methyl-2-pentanol (45 g, 0.44 mol) was slowly added dropwise to the reaction solution over 3 hours, and the mixture was then stirred for 1 hour while raising the temperature to room temperature. The reaction mixture was evaporated under reduced pressure to remove volatile substances, and 4-methyl-2-pentyl dichlorophosphite (77.3 g, 0.38 mol) was obtained in a yield of 86% (¹H NMR (500 MHz, CDCl₃) δ 0.94 (d, 6H), 1.4 (d, 4H), 1.63-1.68 (m, 2H), 4.92 (m, 1H) ppm).

### ii) Preparation of 4-methyl-2-pentyl difluorophosphite

Antimony trifluoride (SbF₃) (26.5 g, 0.15 mol) was added to a 100 mL round-bottom flask under a nitrogen atmosphere. To prevent exothermic reaction, damage to the reaction mixture, and a decrease in the yield of the final product due to a rapid reaction, the mixture was cooled to approximately 0 °C, and 4-methyl-2-pentyl dichlorophosphite (50 g, 0.25 mol) prepared in i) above was slowly added dropwise.

After the reaction was carried out at room temperature for 2 hours, purification was performed by distillation under reduced pressure. The final product, 4-methyl-2-pentyl difluorophosphite (29.1 g, 0.17 mol), in a yield of 69% (¹H NMR (500 MHz, CDCl₃) δ 0.91 (d, 6H), 1.27 (m, 1H), 1.31 (d, 3H), 1.58 (m, 1H), 1.68 (m, 1H), 4.74 (m, 1H) ppm).

### (3) Synthesis Example 3 (Synthesis of the compound of chemical formula 3)

### Preparation of Pentyl difluorophosphite (chemical formula 3)

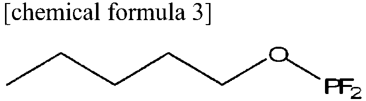

### i) Preparation of Pentyl dichlorophosphite

Heptane (200 mL) and phosphorus trichloride (PCl₃) (56 mL, 0.57 mol) were added to a 500 mL round-bottom flask under a nitrogen atmosphere, stirred for 10 minutes, and then cooled to approximately 0 °C. 1-Pentanol (50 g, 0.57 mol) was slowly added dropwise to the reaction solution over 3 hours, and the mixture was then stirred for 1 hour while raising the temperature to room temperature.

The reaction mixture was evaporated under reduced pressure to remove volatile substances, and pentyl dichlorophosphite (75 g, 0.40 mol) was obtained in a yield of 70% y (¹H NMR (500 MHz, C₆D₆) δ 0.94 (m, 3H), 1.00-1.40 (m, 6H), 3.80 (m, 2H) ppm).

### ii) Preparation of Pentyl difluorophosphite

Antimony trifluoride (SbF₃) (20 g, 0.11 mol) was added to a 100 mL round-bottom flask under a nitrogen atmosphere. To prevent exothermic reaction, damage to the reaction mixture, and a decrease in the yield of the final product due to a rapid reaction, the mixture was cooled to approximately 0 °C, and pentyl dichlorophosphite (30 g, 0.16 mol) prepared in step (i) was slowly added dropwise.

After the reaction was sufficiently carried out at room temperature for 2 hours or more, purification was performed by distillation under reduced pressure. The final product, pentyl difluorophosphite (12 g, 0.077 mol), was obtained in a yield of 48% (¹H NMR (500 MHz, C₆D₆) δ 0.74 (m, 3H), 1.00-1.20 (m, 4H), 1.30 (m, 2H), 3.67 (q, 2H) ppm).

### Examples and Comparative Examples

### Example 1

### (1) Preparation of Electrolyte Solution

A 1.05 M LiPF₆ solution (a mixed solvent of EC/EMC in a volume ratio of 25:75) was prepared. Based on the total weight of the electrolyte solution, 2 wt% of fluoroethylene carbonate (FEC), 1 wt% of LiPO₂F₂(W3), 1.0 wt% of 1,3-propane sultone (PS), and 0.3 wt% of 1,3-propene sultone (PRS) were added to the LiPF₆ solution, and 1 wt% of the compound of chemical formula 1-1 was further added as a fluorine-based additive.

### (2) Manufacture of Lithium Secondary Battery Sample

A slurry was prepared by mixing Li_{1.11}Ni_{0.34}Mn_{0.55}O₂ as a cathode active material, carbon black as a conductive material, and polyvinylidene fluoride (PVdF) as a binder in a weight ratio of 92:5:3. The slurry was uniformly applied to an aluminum foil having a thickness of 15 µm, followed by vacuum drying and roll-pressing at 130 °C to fabricate a cathode for a lithium secondary battery.

An anode slurry was prepared by mixing 95 wt% of an anode active material, in which artificial graphite and natural graphite were mixed in a weight ratio of 7:3, 1 wt% Super-P as a conductive agent, 2 wt% styrene-butadiene rubber (SBR) as a binder, and 2 wt% carboxymethyl cellulose (CMC) as a thickener. The anode slurry was uniformly coated on a copper foil having a thickness of 15 µm, and then dried and roll-pressed to fabricate an anode.

The anode slurry was uniformly applied to a copper foil (thickness: 15 µm) having a protrusion part (an anode tab) on one side, excluding the protrusion part, and then dried and roll-pressed to fabricate an anode.

The cathode and anode fabricated as described above were each cut to a predetermined size and stacked. A separator (polyethylene, thickness: 20 µm) was interposed between the cathodes and anodes to form an electrode assembly. The tab portions of the cathode and the tab portions of the anode were then welded, respectively.

The electrode assembly was placed into a pouch, and three sides of the pouch were sealed, leaving one side open for electrolyte injection. At this time, the portion having the electrode tab was included in the sealed part. After injecting the electrolyte solution prepared in (1) through the electrolyte injection side, the remaining electrolyte injection side was also sealed, and the cell was allowed to be impregnated for 12 hours or more to manufacture a lithium secondary battery sample.

### Example 2

A secondary battery sample was manufactured in the same manner as in Example 1, except that the compound of chemical formula 2-1 prepared in Synthesis Example 2 was used as the fluorine-based additive.

### Example 3

A secondary battery sample was manufactured in the same manner as in Example 1, except that the compound of chemical formula 3 prepared in Synthesis Example 3 was used as the fluorine-based additive.

### Comparative Example 1

A secondary battery sample was manufactured in the same manner as in Example 1, except that the fluorine-based additive was omitted during the preparation of the electrolyte solution.

### Comparative Example 2

A secondary battery sample was manufactured in the same manner as in Example 1, except that the compound of chemical formula 4 below was used as the fluorine-based additive.

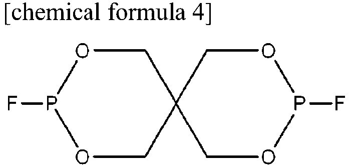

### Comparative Example 3

A secondary battery sample was manufactured in the same manner as in Example 1, except that a blend obtained by mixing Li[Ni_{0.6}Co_{0.2}Mn_{0.2}]O₂ and Li[Ni_{0.8}Co_{0.1}Mn_{0.1}]O₂ in a weight ratio of 6:4 was used as the cathode active material.

### Experimental Example

### (1) Evaluation of Room Temperature Characteristics

### 1-1) Evaluation of Initial Capacity

The secondary batteries of the examples and comparative examples were each charged at 0.5C under CC/CV conditions (4.4 V, 0.05C cut-off) at 25 °C, and then discharged at 0.5C under CC conditions (2.7 V cut-off). The discharge capacity was then measured.

### 1-2) Evaluation of Internal Resistance (D DCIR)

Charging and discharging were performed on the batteries at each corresponding C-rate for 10 seconds, while sequentially varying the C-rate to 0.2C, 0.5C, 1.0C, 1.5C, 2.0C, 2.5C and 3.0C at a 60% state of charge (SOC) point. Then, the terminal voltage points were plotted to construct a linear equation, and the slope of the resulting line was adopted as the DCIR.

### 1-3) Evaluation of Room-Temperature Cycle Life Characteristics

1,000 cycles of CC/CV charging at a rate of 0.5C (4.4 V, 0.05C cut-off) and CC discharging at a rate of 0.5C (2.7 V cut-off) were performed on the secondary batteries of the examples and comparative examples at 25°C. The discharge capacity after cycling was measured, and the capacity retention was calculated as a percentage of the initial discharge capacity to evaluate the room-temperature cycle life characteristics.

### (2) Evaluation of Low-Temperature (-10 °C) Performance

### 2-1) Evaluation of Low-Temperature Capacity

The batteries of the examples and comparative examples were charged at 0.5C under CC/CV conditions (4.4 V, 0.05C cut-off) in a chamber at -10 °C, and the charge capacity was then measured.

Thereafter, the batteries were discharged at 0.5C under CC conditions (2.7 V cut-off), and the discharge capacity was then measured.

### 2-2) Evaluation of Low-Temperature Internal Resistance

The batteries of the examples and comparative examples were stored in a chamber at - 10 °C for 4 hours, and the low-temperature internal resistance was then measured in the same manner as in 1-2).

### (3) Evaluation of High-Temperature Cycle Life Characteristics

900 cycles of CC/CV charging at a rate of 0.5C (4.4 V, 0.05C cut-off) and CC discharging at a rate of 0.5C (2.7 V cut-off) were performed on each of the secondary batteries of the examples and comparative examples at 45°C. The discharge capacity after cycling was measured, and the capacity retention was calculated as a percentage of the initial discharge capacity to evaluate the high-temperature cycle life characteristics.

### (4) Evaluation of High-Temperature Storage Characteristics

### 4-1) Evaluation of Battery Thickness after High-Temperature Storage

The batteries of the examples and comparative examples, charged as in 1-1), were stored in a constant temperature and humidity chamber at 60°C for 13 weeks. Thereafter, the thickness of each battery was measured using a flat-plate thickness measuring device (Mitutoyo, 543-490B), and the rate of increase in thickness relative to the initial thickness was calculated.

### 4-2) Evaluation of Internal Resistance after High-Temperature Storage

The batteries of the examples and comparative examples were stored in a chamber at 60°C for 4 hours, and the high-temperature internal resistance of each battery was measured in the same manner as in 1-2). The rate of increase in internal resistance relative to the internal resistance measured in 1-2 was then calculated.

### 4-3) Evaluation of Capacity retention (Ret) after High-Temperature Storage

The secondary batteries of the examples and comparative examples, stored at high temperatures as described above, were discharged at 0.5C under CC conditions (2.7 V cut-off), and the discharge capacity of each battery was measured.

The capacity retention was calculated as a percentage of the discharge capacity after high-temperature storage relative to the initial capacity measured in 1-1).

The evaluation results are shown in Table 1 below.

**[TABLE 1]**

| Secondary battery | | Exampl e 1 | Exampl e 2 | Exampl e 3 | Comparativ e Example 1 | Comparativ e Example 2 | Comparativ e Example 3 |
|---|---|---|---|---|---|---|---|
| Room temperature | Initial capacity (mAh) | 1730 | 1740 | 1715 | 1749 | 1742 | 1750 |
| | D_DCIR (mΩ) | 36.5 | 36.6 | 37.2 | 37.6 | 40.4 | 39.6 |
| | Roomtemperatur e cycle life (%) | 78.9 | 78.4 | 78.3 | 77.2 | 71.1 | 70.0 |
| Performanc e at -10 °C | D_DCIR (mΩ) | 138.9 | 141.4 | 143.1 | 143.3 | 147.2 | 144.5 |
| | Discharge capacity (mAh) | 1297 | 1274 | 1249 | 1256 | 1228 | 1246 |
| Cycle life at 45 °C (900 cycles) | Retention (%) | 64.5 | 66.1 | 61.9 | 61.1 | 60.0 | 55.3 |
| Storage at 60 °C for 14 weeks | Thickness increase rate (%) | 161 | 150 | 194 | 216 | 207 | 250 |
| | Resistance increase rate | 123 | 133 | 140 | 153 | 143 | 186 |
| | Retention (%) | 90 | 87 | 84 | 79 | 78 | 72 |

Referring to Table 1, the secondary batteries of the examples using electrolyte solutions including fluorine-based additives containing terminal difluorophosphite (-OPF₂) groups, while maintaining a similar initial capacity at room temperature, exhibited significantly improved low- and high-temperature characteristics (high capacity characteristics and low internal resistance) compared to the secondary battery of Comparative Example 1, which did not include the fluorine-based additive, even under an OLO cathode material and high-voltage charging conditions. In addition, gas generation was reduced even after high-temperature storage, thereby suppressing an increase in the battery thickness.

Comparative Example 2, which used a fluorine-based additive that did not include terminal difluorophosphite (-OPF₂) groups, exhibited significantly lower capacity characteristics compared to the examples, and provided a lower capacity than Comparative Example 1 at low temperatures.

Comparative Example 3, which used a nickel-cobalt-manganese cathode active material with a lithium molar ratio of 1, did not provide sufficient high-voltage charging stability despite the use of the fluorine-based additives according to the examples.

Example 3, which used a fluorine-based additive containing a linear alkyl group, exhibited relatively lower capacity characteristics and higher internal resistance compared to Examples 1 and 2.

## Claims

1. A lithium secondary battery comprising:
an electrode assembly comprising a cathode including a lithium-transition metal oxide in which the molar ratio of lithium to all metal elements is greater than 1, and an anode disposed opposite the cathode; and
an electrolyte solution that impregnates the electrode assembly and includes a fluorine-based additive having a terminal difluorophosphite group (-OPF₂).

2. The lithium secondary battery according to claim 1, wherein the fluorine-based additive comprises a compound in which the terminal difluorophosphite group is bonded to a branched saturated hydrocarbon group.

3. The lithium secondary battery according to claim 2, wherein the fluorine-based additive comprises a compound represented by chemical formula 1 or chemical formula 2 below: 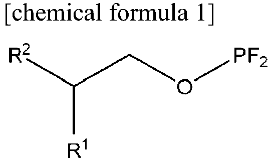 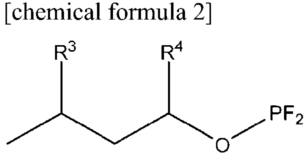 (in chemical formulae 1 and 2, R¹, R², R³ and R⁴ are each independently a C1-C10 alkyl group).

4. The lithium secondary battery according to claim 3, wherein in chemical formula 1, R¹ is a C4-C10 alkyl group, and R², R³ and R⁴ are each independently a C1-C3 alkyl group.

5. The lithium secondary battery according to claim 3, wherein the fluorine-based additive comprises a compound represented by chemical formula 1-1 or chemical formula 2-1 below:

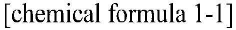

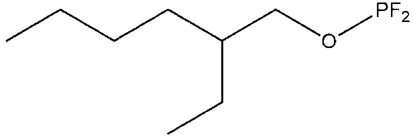

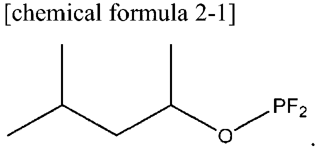

6. The lithium secondary battery according to claim 1, wherein the electrolyte solution further comprises an organic solvent and a lithium salt, and wherein the fluorine-based additive is included in an amount of 0.1% by weight to 5.0% by weight, based on the total weight of the electrolyte solution.

7. The lithium secondary battery according to claim 6, wherein the fluorine-based additive is included in an amount of 0.5% by weight to 2.0 % by weight, based on the total weight of the electrolyte solution.

8. The lithium secondary battery according to claim 6, wherein the electrolyte solution further comprises at least one auxiliary additive selected from the group consisting of a cyclic carbonate compound, a fluorine-substituted cyclic carbonate compound, a sultone compound, and a cyclic sulfonate compound.

9. The lithium secondary battery according to claim 8, wherein the auxiliary additive is included in an amount of 0.01% by weight to 5% by weight, based on the total weight of the electrolyte solution.

10. The lithium secondary battery according to claim 6, wherein the organic solvent comprises at least one selected from the group consisting of ethylene carbonate (EC), ethyl methyl carbonate (EMC), dimethyl carbonate (DMC), and diethyl carbonate (DEC).

11. The lithium secondary battery according to claim 1, wherein the molar ratio of lithium to all metal elements in the lithium-transition metal oxide is greater than 1.1.

12. The lithium secondary battery according to claim 1, wherein the lithium-transition metal oxide further comprises nickel and manganese.

13. The lithium secondary battery according to claim 12, wherein the molar ratio of manganese in the lithium-transition metal oxide is greater than the molar ratio of nickel.

14. The lithium secondary battery according to claim 13, wherein the molar fraction of manganese to all elements excluding lithium and oxygen in the lithium-transition metal oxide is 0.5 or more.
